Europäisches Patentamt

European Patent Office

Office européen des brevets

(11) Publication number: **0 147 038 B1**

# EUROPEAN PATENT SPECIFICATION

(45) Date of publication of patent specification: **18.01.89**

(51) Int. Cl.⁴: **G 01 F 23/02**

(21) Application number: **84307644.9**

(22) Date of filing: **06.11.84**

(54) Liquid level gauges.

(30) Priority: **23.12.83 US 564941**

(43) Date of publication of application:
**03.07.85 Bulletin 85/27**

(45) Publication of the grant of the patent:
**18.01.89 Bulletin 89/03**

(84) Designated Contracting States:
**AT BE CH DE FR GB IT LI LU NL SE**

(56) References cited:
**EP-A-0 061 334
DE-A-2 920 199
US-A-3 713 338
US-A-4 217 778**

(73) Proprietor: **THE BABCOCK & WILCOX
COMPANY**
**1010 Common Street P.O. Box 60035
New Orleans Louisiana 70160 (US)**

(72) Inventor: **Sherrick, Ronald Eugene**
**824 Sheridan Drive
Lancaster Ohio 43130 (US)**

(74) Representative: **Cotter, Ivan John et al
D. YOUNG & CO. 10 Staple Inn
London WC1V 7RD (GB)**

Courier Press, Leamington Spa, England.

## Description

This invention relates to liquid level gauges, for instance gauges for determining the level of water and/or steam in for instance a boiler.

A significant advancement with respect to gauges for determining a liquid level within a boiler was the bi-colour principle disclosed in the Blackburn US Patents Nos. US-A-2 024 815 and US-A-2 115 899. The basis for this principle is that steam and water have different indices of refraction. By directing light from differently coloured light sources, such as red and green light sources, through a specially formed prismatic gauge tube assembly, the portion of the gauge tube containing steam appears red in colour to the observer while the portion of the gauge tube containing water appears green in colour. Because of these different colours, this type of gauge makes it possible easily to detect whether the gauge glass is full or empty and minimises the possibility that the observer might mistake a gauge full of water for a gauge full of steam, which could lead to disastrous results.

Variations of the bi-colour principle disclosed in the foregoing Blackburn patents have been developed and incorporated into other liquid level gauges in order to minimise the possibility of human error with respect to determining the presence and/or the level of steam or water in a gauge glass. These modifications have minimised the possibility of such human error when viewing the gauge, but have not eliminated the possibility of an erroneous reading.

European Patent Application Publication No. EP-A-O 061 334 discloses a liquid level gauge in which light from a light source is transmitted via a first condensing lens, a boiler water level glass and a second condensing lens to an optical fibre cable.

German Patent Application Publication No. DE-A-2 920 199 discloses a liquid level gauge of the immersion type in which light from a single light source common to several gauges is transmitted, via an optical fibre, to a body immersed in a liquid. Light emerging from the body is intercepted by another optical fibre. A further optical fibre is provided adjacent the single light source to indicate whether the light source is illuminated.

US Patent No. US-A-4 217 778 discloses a liquid level gauge of the Blackburn type, i.e. a gauge comprising a body member having front and rear windows and a prismatic light refracting fluid passage therethrough connecting the front and rear windows, a light source provided adjacent the rear window, a condensing lens interposed between the light source and the rear window to direct a beam of light from the light source through the rear window into the light refracting fluid passage, and light reception means provided adjacent the front window to intercept the light beam after it passes through the front window after exiting from the light refracting fluid passage and thereby provide an indication as to the presence or absence of liquid in the light refracting fluid passage.

According to the present invention there is provided a liquid level gauge of the Blackburn type as just defined in connection with US-A-4 217 778, characterised in that:

(i) there are a plurality of light sources provided adjacent the rear window.

(ii) the condensing lens is operative to project a beam of light from each of the respective light sources into the passage:

(iii) a respective one of a first set of optical fibres is provided adjacent each of the light sources to provide an indication as to whether each of the light sources is illuminated;

(iv) the light reception means comprises a second set of optical fibres; and

(v) a second condensing lens is interposed between the front window and the second set of optical fibres to direct the light exiting from the light refracting fluid passage towards the second set of optical fibres.

Features (i) and (ii) together minimise the possibility of a reading error in the event of failure of one of the light sources in that the light sources are redundant. That is, if one of them fails, light will still be beamed on to the passage via the associated condensing lens. Feature (iii) provides that the failure of a light source is nonetheless indicated so that corrective action can be taken. Features (iv) and (v) together enable the light reception means to be of a simple and inexpensive form, namely a set of optical fibres.

A preferred embodiment of the present invention described in detail below is used to monitor the level of steam/water in a boiler. In the preferred embodiment, because of the relatively low index of refraction of steam as compared to that of water, the second set of optical fibres intercept light when steam is present in the body of the gauge, permitting the actuation of a sensing device to indicate the presence of steam. In contrast, when water is present in the body of the gauge, the light is refracted away from the optical fibres, resulting in the sensing device remaining unactuated. As mentioned above, the redundant light sources ensure the presence of light in the passage provided in the body of the gauge. The first set of optical fibres adjacent each light source intercept the light produced by the light sources and thus provide an indication to another sensing device that the light sources are illuminated at all times.

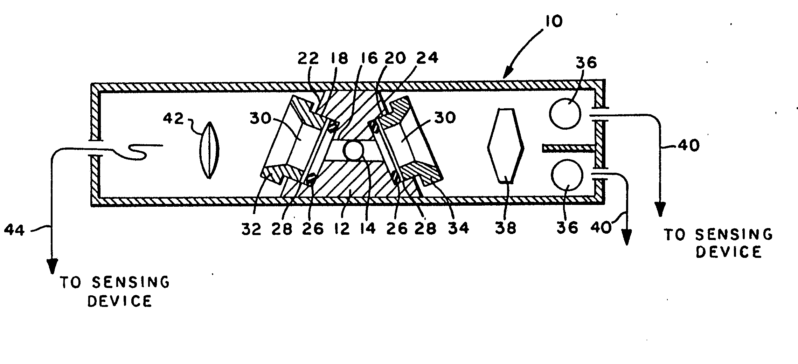

The invention will now be further described, by way of illustrative and non-limiting example, with reference to the accompanying drawing, the single figure of which is a cross-sectional view of a liquid level gauge embodying the present invention.

The single figure of the drawing is a cross-sectional view of a liquid level gauge 10 embodying the invention. It should be noted that the Blackburn principle is adhered to in practicing the present invention. The gauge 10 has a body 12 preferably formed of metal so as to have sufficient strength to withstand the designed pressure. The body 12 has a generally trapezoidal cross-section and has a vertical water passage 14 formed therein. A horizontal cross passage 16 extends through the central portion of the body 12 so as to intersect the axis of the water passage 14 and terminates in counterbored openings 18, 20 provided in front and rear faces 22, 24, respectively, of the body 12. The front counterbored opening 18 is positioned so that its axis is perpendicular to the front face 22 of the body 12, and the rear counterbored opening 20 is positioned so that its axis is perpendicular to the rear face 24 of the body 12. A sealing gasket 26, a mica shield 28 and a port glass 30 are provided in each of the counterbored openings 18, 20 and are retained therein by a front clamping plate 32 and a rear clamping plate 34 which are attached by bolts which engage threaded holes in the front face 22 and the rear face 24, respectively, or by other suitable attachment means. The clamping plates 32, 34 form viewing ports through which the prismatic chamber defined by the internal area between the port glasses 30 can be viewed.

The water passage 14 is capable of being connected at its upper end to the steam space located within the upper portion of a steam drum of a boiler, and of being connected at its lower end to the water space within the boiler. In this manner either water or steam will be observed, depending upon the water level within the boiler, when the prismatic chamber is viewed through the viewing ports.

A plurality of light sources 36 are located adjacent a rear wall of the gauge 10. An optical condensing lens 38 is interposed between the plurality of light sources 36 and the rear face 24 of the body 12. The condensing lens 38 is utilised to project a columnar beam of light from each of the light sources 36 into the water passage 14 via the rear counterbored opening 20. An optical fibre 40 is positioned adjacent each of the light sources 36 and passes through the rear wall of the gauge 10 for connection to a sensing device (not shown) which determines whether each of the light sources 36 is illuminated. An optical condensing lens 42 is interposed between the front face 22 of the body 12 and the front wall of the gauge 10, and is utilised to form the light which passes through the horizontal cross passage 16 into a columnar light beam and project the beam against a front wall of the gauge 10. A multiple optical fibre cable 44 is located adjacent the front wall of the gauge 10 and is positioned so as to intercept the beam of light produced by and exiting from the condensing lens 42. The optical fibres 44 pass through the front wall of the gauge 10 and are connected to a sensing device (not shown) which senses whether light is being transmitted through the body 12. This latter sensing device and the former sensing device for the light sources 36 can be located at a location remote from the hostile environment in which the gauge 10 is installed.

Inasmuch as steam has a relatively low index of refraction, the light which is directed into the cross passage 16 when steam is present in the water passage 14 will pass in a relative straight path therethrough to the optical fibres 44 which, in turn, cause the sensing device associated therewith to sense that light is being transmitted through the body 12 to the fibres 44 and thus that steam is present in the water passage 14. Conversely, when water is present in the water passage, the light which is directed into the cross passage 16 is refracted laterally because of the greater index of refraction of water. Because of this, the light beam produced by the condensing lens 42 is refracted and does not intercept the optical fibres 44. In this manner, the sensing device associated with the fibres 44 is not actuated, thus indicating that water is present in the water passage 14.

From the foregoing, it is apparent that a plurality of gauges 10 can be arranged in a stacked relationship and that the water passages 14 can be fluidically inter-connected so that the level of steam and/or water within a boiler can be determined incrementally. In this manner, an accurate indication of the level of steam and/or water within a boiler can be obtained.

**Claims**

1. A liquid level gauge of the Blackburn type, i.e. a gauge (10) comprising a body member (12) having front and rear windows and a prismatic light refracting fluid passage (16) therethrough connecting the front and rear windows, a light source (36) provided adjacent the rear window, a condensing lens (38) interposed between the light source (36) and the rear window to direct a beam of light from the light source (36) through the rear window into the light refracting fluid passage (16), and light reception means (44) provided adjacent the front window to intercept the light beam after it passes through the front window after exiting from the light refracting fluid passage (16) and thereby provide an indication as to the presence or absence of liquid in the light refracting fluid passage (16), said gauge being characterised in that:

(i) there are a plurality of light sources (36) provided adjacent the rear window;

(ii) the condensing lens (38) is operative to project a beam of light from each of the respective light sources (36) into the passage (16):

(iii) a respective one of a first set of optical fibres (40) is provided adjacent each of the light sources (36) to provide an indication as to whether each of the light sources is illuminated;

(iv) the light reception means (44) comprises a second set of optical fibres (44); and

(v) a second condensing lens (42) is interposed between the front window and the second set of optical fibres (44) to direct the light exiting from the light refracting fluid passage (16) towards the second set of optical fibres (44).

2. A liquid level gauge according to claim 1, wherein the second set of optical fibres (44) is positioned so as to intercept the light beam when there is a lack of liquid in the light refracting fluid passage (16).

**Patentansprüche**

1. Flüssigkeitsstandanzeiger vom Blackburn-Typ, d.h. ein Meßinstrument (10) mit einem Teil (12) mit einem vorderen und einem hinteren Fenster und einem prismatischen, lichtbrechenden Fluiddurchgang (16) durch dieses Teil, welcher das vordere und das hintere Fenster verbindet, wobei eine Lichtquelle (36) neben dem hinteren Fenster vorgesehen ist, eine Kondensorlinse (38) zwischen der Lichtquelle (36) und dem hinteren Fenster angeordnet ist, um einen Lichtstrahl von der Lichtquelle (36) durch das hintere Fenster in den lichtbrechenden Fluiddurchgang (16) zu richten, und ein Lichtaufnahmemittel (44) neben dem vorderen Fenster vorgesehen ist, um den Lichtstrahl aufzufangen, nachdem er durch das vordere Fenster hindurchgegangen und aus dem lichtbrechenden Fluiddurchgang (16) ausgetreten ist, wodurch eine Anzeige vorgesehen wird auf die Gegenwart oder Abwesenheit von Flüssigkeit in dem lichtbrechenden Fluiddurchgang (16), wobei das Meßinstrument dadurch gekennzeichnet ist, daß:

(i) eine Mehrzahl von Lichtquellen (36) neben dem hinteren Fenster angeordnet ist;

(ii) die Kondensorlinse (38) betrieblich derart vorgesehen ist, daß sie einen Lichstrahl aus jeder der betreffenden Lichtquellen (36) in den Durchgang (16) hinein projiziert;

(iii) eine entsprechende erste Gruppe optischer Fasern (40) neben jeder Lichtquelle (36) vorgesehen ist, um eine Anzeige zu schaffen, ob die jeweilige Lichtquelle beleuchtet ist;

(iv) das Lichtaufnahmemittel (44) eine zweite Gruppe von optischen Fasern (44) aufweist; und

(v) eine zweite Kondensorlinse (42) zwischen dem vorderen Fenster und der zweiten Gruppe von optischen Fasern (44) angeordnet ist, um das aus dem lichtbrechenden Fluiddurchgang (16) austretende Licht zu der zweiten Gruppe von optischen Fasern (44) zu richten.

2. Flüssigkeitsstandanzeiger nach Anspruch 1, wobei die zweite Gruppe von optischen Fasern (44) angeordnet ist, um den Lichtstrahl aufzufangen, wenn ein Mangel an Flüssigkeit in dem lichtbrechenden Fluiddurchgang (16) vorhanden ist.

**Revendications**

1. Jauge de liquide du type Blackburn, c'est-à-dire jauge (10) comprenant un corps (12) présentant des fenêtres avant et arrière et traversé par un passage de fluide prismatique réfractant la lumière (16) reliant les fenêtres avant et arrière, une source lumineuse (36) prévue près de la fenêtre arrière, une lentille condensatrice (38) interposée entre la source lumineuse (36) et la fenêtre arrière afin de diriger un faisceau de lumière provenant de la source lumineuse à travers la fenêtre arrière à l'intérieur du passage de fluide réfractant la lumière (16), et un moyen de réception de lumière (44) prévu près de la fenêtre avant pour intercepter la lumière lorsqu'elle a traversé la fenêtre avant après être sortie du passage de fluide réfractant la lumière (16) et fournir par là une indication quant à la présence ou à l'absence de liquide dans le passage de fluide réfractant la lumière (16), ladite jauge étant caractérisée en ce que:

(I) il existe une série de sources lumineuses (36) prévues près de la fenêtre arrière;

(II) la lentille condensatrice (38) assure la projection dans le passage (16) d'un faisceau lumineux provenant de chacune des diverses sources lumineuses (36);

(III) une fibre optique respective d'un premier ensemble de fibres optiques (40) est prévue près de chacune des sources lumineuses (36) pour indiquer si oui ou non chacune des sources lumineuses est éclairée;

(IV) le moyen de réception de lumière (44) est constitué par un second ensemble de fibres optiques (44); et

(V) une seconde lentille condensatrice (42) est interposée entre la fenêtre avant et le second ensemble de fibres optiques (44) pour diriger la lumière sortant du passage de fluide réfractant la lumière (16) vers le second ensemble de fibres optiques (44).

2. Jauge de niveau de liquide selon la revendication 1, dans laquelle le second ensemble de fibres optiques (44) est placé de façon à intercepter le faisceau lumineux en l'absence de liquide dans le passage de fluide réfractant la lumière (16).